# EUROPÄISCHE PATENTSCHRIFT

(11) **EP 1 222 370 B1**
(45) Veröffentlichungstag und Bekanntmachung des Hinweises auf die Patenterteilung: **03.12.2003**
(21) Anmeldenummer: 00975784.0
(22) Anmeldetag: 22.09.2000
(51) Int. Cl.: F01N 3/20, B01D 53/94

(54) **VORRICHTUNG UND VERFAHREN ZUR DOSIERUNG EINES REDUKTIONSMITTELS**
DEVICE AND METHOD FOR METERING A REDUCING AGENT
DISPOSITIF ET PROCEDE POUR DOSER UN AGENT DE REDUCTION

(30) Priorität: 01.10.1999 DE 19947197
(43) Veröffentlichungstag der Anmeldung: 17.07.2002
(73) Patentinhaber: ROBERT BOSCH GMBH, 70442 Stuttgart (DE)
(72) Erfinder: FRISCH, Walter, 71254 Hirschlanden (DE); HUBER, Sven, 83404 Ainring/Mitterfelden (DE); KRAH, Jürgen, A-5101 Bergheim (AT); MAYER, Hanspeter, A-5421 Adnet (AT); OFFENHUBER, Michael, A-5421 Adnet (AT); SACHSENHOFER, Robert, A-5411 Oberalm (AT); WEISS, Roland, A-5424 Vigaun (AT); FOETSCHL, Markus, A-5580 Unternberg (AT); SCHWARZ, Roland, A-5020 Salzburg (AT)
(86) Internationale Anmeldenummer: DE0003299
(87) Internationale Veröffentlichungsnummer: WO01025600

(56) Entgegenhaltungen:
- DE-A- 3 230 608
- DE-A- 4 441 261
- US-A- 5 394 844
- US-A- 5 884 475

## Beschreibung

Die vorliegende Erfindung betrifft ein Verfahren zur Dosierung eines im Rahmen einer katalytischen Abgasnachbehandlung verwendeten Reduktionsmittels, insbesondere eines Harnstoffs bzw. einer Harnstoff-Wasser-Lösung, nach dem Oberbegriff des Patentanspruchs 1.

Als Folge der in den letzten Jahren stets niedriger anzusetzenden Schadstoffgrenzwerte sind zahlreiche Vorrichtungen und Verfahren zur Nachbehandlung von Abgasen von Brennkraftmaschinen entwickelt worden. Beispielsweise mittels Katalysatorsystemen, welche Harnstoff und/oder Ammoniak als Reduktionsmittel zur NOₓ-Konvertierung verwenden, sind effiziente Abgasnachbehandlungssysteme zur Verfügung gestellt.

Um eine Verminderung von NOₓ-Bestandteilen in Abgasen zu erzielen, wurden insbesondere für Dieselmotoren Reduktionskatalysatoren entwickelt, die üblicherweise in sogenannte SCR-Katalysatoren (engl. Selective Catalytic Reduction) mit Harnstoffdosiersystem und Speicherkatalysatoren unterteilt werden. Die sogenannten SCR-Katalysatoren werden mittels einer Harnstoff- und/oder Ammoniakreduktionsmittelzufuhr regeneriert, während die sogenannten Speicherkatalysatoren mit Kohlenwasserstoffen des mitgeführten Brennkraftmaschinen-Brennstoffs in sogenannten Abgasfettphasen regeneriert werden.

Aus der EP-A-0381236 ist ein System bekannt, welches zum Entfernen von Stickoxiden in Abgasen aus einem Dieselmotor Ammoniak als Reduktionsmittel zudosiert. Bei diesem System ist ferner ein Turbolader vorgesehen, welcher den Druck des Abgases senkt. Eine verwendete Harnstoff-Wasser-Lösung wird mittels Druckluft zudosiert.

Aus der DE-A-44 41 261 ist eine Einrichtung zum Nachbehandeln von Abgasen einer Brennkraftmaschine bekannt, bei welcher die Leistung des Katalysators über eine Dosiereinrichtung verbessert werden soll. Die Dosiereinrichtung ist als Kleinstmengendosier-Verdrängerpumpe ausgebildet, die auf einem zylindrischen Rotationskörper einen Gewindegang in der Form einer Nut aufweist, wobei zur Änderung der Förderleistung der Rotationskörper einen Gewindegang in der Form einer Nut aufweist, wobei zur Änderung der Förderleistung der Rotationskörper mit variabler Drehzahl angetrieben wird. Die Zugabe des Reduktionsmittels in das Abgassystem erfolgt vorzugsweise kennfeldabhängig, d.h. in Abhängigkeit von Menge und/oder Zusammensetzung des Abgases.

Die US 5 884 475 A beschreibt ein Verfahren zum Freiblasen einer Leitung einer Abgasnachbehandlungsanordnung mittels Druckluft.

Bei herkömmlichen Dosiersystemen stellt man Dosierungenauigkeiten fest, welche durch Druckschwankungen in dem Reduktionsmittelleitungssystem auftreten, welches einen Reduktionsmitteltank beispielsweise mit einer Mischkammer zur Bildung eines Aerosols verbindet. Aufgabe der Erfindung ist es, einen gegenüber herkömmlichen Dosiersystemen genauere Dosierung von Reduktionsmitteln zu ermöglichen.

Diese Aufgabe wird gelöst durch ein Verfahren mit den Merkmalen des Patentanspruchs 1.

Es wurde festgestellt, dass die Dosiergenauigkeitsschwankungen durch im Reduktionsmittel auftretende Luftblasen verursacht werden. Es wird daher erfindungsgemäß vorgeschlagen, ein herkömmliches Reduktionsmittel-Leitungssystem mit einem zusätzlichen steuerbaren bzw. regelbaren Entlüftungskreislauf auszubilden. Ein derartiger Entlüftungskreislauf ermöglicht eine aktive Entlüftung des Reduktionsmittel-Leitungssystems und damit beispielsweise eine rascheres Anlaufen einer Pumpe. Ein unkontrolliertes Entlüften über ein Dosier- bzw. Einspritzventil, über welches eine Mischkammer mit Reduktionsmittel beaufschlagt wird, kann vermieden werden. Dadurch, dass ein auf eine Förderpumpe wirkender Gegendruck durch Entlüftung vermindert werden kann, können auch der Pumpenanlauf sowie der Pumpenbetrieb verbessert werden.

Vorteilhafte Ausgestaltungen der erfindungsgemäßen Vorrichtung bzw. des erfindungsgemäßen Verfahrens sind Gegenstand des Unteranspruchs.

Zweckmäßigerweise weist der steuerbare Entlüftungskreislauf ein getaktet ansteuerbares Entlüftungsventil auf. Ein derartiges Entlüftungsventil ist in einfacher Weise ansteuerbar und erweist sich in der Praxis als robustes und zuverlässiges Bauteil.

Zweckmäßigerweise ist das Entlüftungsventil als 2/2-Wegeventil ausgebildet.

Bevorzugte Ausgestaltungen der Erfindung werden nun anhand der beigefügten Zeichnung weiter erläutert. In dieser zeigt
- Figur 1: eine schematische blockschaltbildartige Ansicht einer bevorzugten Ausführungsform der erfindungsgemäßen Vorrichtung,
- Figur 2: ein Flußdiagramm zur Darstellung einer mit der erfindungsgemäßen Vorrichtung durchführbaren Startstrategie,
- Figur 3: ein Flußdiagramm einer mit der erfindungsgemäßen Vorrichtung durchführbaren Entlüftungsstrategie, und
- Figur 4: eine mit der erfindungsgemäßen Vorrichtung durchführbare Anlaufstrategie.

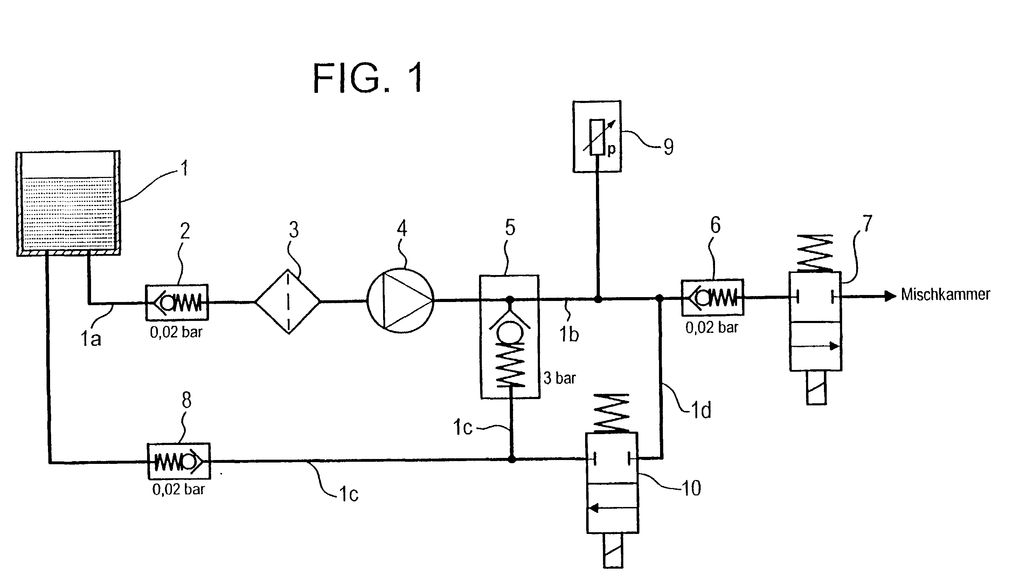

Die in Figur 1 dargestellte Vorrichtung bzw. Vorrichtung stellt ein System zur Dosierung eines im Rahmen einer katalytischen Abgasnachbehandlung verwendeten Reduktionsmittels dar. In derartigen Systemen wird Reduktionsmittel in eine Mischkammer eingeführt, dort zur Herstellung eines Aerosols mit Druckluft beaufschlagt und in das zu behandelnde Abgas eingebracht. Luftzufuhrsysteme und Bauteile zur katalytischen Nachbehandlung sind an sich bekannt und nicht Gegenstand der vorliegenden Anmeldung. Die vorliegende Anmeldung beschäftigt sich mit dem Reduktionsmittel-Zuleitungssystem. Beispielhaft wird in der folgenden Darstellung als Reduktionsmittel eine Harnstoff-Wasser-Lösung verwendet, welche der Einfachheit halber auch als Harnstoff bezeichnet wird.

In Figur 1 ist mit 1 ein Harnstofftank bezeichnet, aus welchem eine Harnstoff-Wasser-Lösung über eine Harnstoffleitung 1a mit einem Rückschlagventil 2 und einen als Filtersieb ausgeführten Filter 3 von einer Förderpumpe 4 angesaugt und über eine zweite Harnstoffleitung 1b mit einem Druckregler bzw. -dämpfer 5 sowie einem weiteren Rückschlagventil 6 zu einem Dosier- bzw. Einspritzventil einer (nicht dargestellten) Mischkammer gefördert wird. Das Dosierventil 7 dosiert die erforderliche Harnstoff-Wasser-Lösung in einen Mischraum der Mischkammer ein. Eine eventuell auftretende Überströmmenge ist über den Druckregler 5 und ein Rückschlagventil 8 durch eine Rücklaufleitung 1c in den Harnstofftank 1 zurückführbar. Der in der Reduktionsmittelleitung 1b herrschende Druck ist mittels eines Drucksensors 9 feststellbar und es können Druckschwankungen korrigiert werden (Einspritzmengenkorrektur).

Zwischen der Pumpe 4 und dem Dosierventil 7, insbesondere zwischen dem Druckregler 5 und dem Dosierventil 7, zweigt eine weitere Harnstoffleitung 1d ab, welche mit einem als Entlüftungsventil 10 dienenden 2/2-Wegeventil beaufschlagbar ist. Die Harnstoffleitung 1d mündet in der bereits erwähnten Rücklaufleitung 1c.

Das Entlüftungsventil 10 ist getaktet ansteuerbar.

Durch entsprechende Ansteuerung des Entlüftungsventils 10 ist eine Entlüftung des dem Dosierventil 7 zugeführten Harnstoffs durchführbar, was insgesamt zu einer gegenüber herkömmlichen Lösungen höheren Dosiergenauigkeit führt. Ein die Pumpe 4 beaufschlagender Gegendruck im Harnstoffkreislauf kann gegenüber herkömmlichen Lösungen vermindert werden, wodurch die Pumpe 4 mit relativ geringer Pumpenleistung angefahren werden kann. Das heißt, durch Öffnung der als Bypass wirkenden Leitung 1d durch entsprechende Ansteuerung des Entlüftungsventils 10 kann ein gegenüber herkömmlichen Lösungen schnellerer Dosierbeginn bei gleichzeitiger längerer Lebensdauer des Systems gewährleistet werden.

Das Entlüftungsventil 10, welches auch innerhalb der Mischkammer des Harnstoff-Dosiersystems angeordnet sein kann, wird von einer (nicht dargestellten) Steuerlogik angesteuert. Durch Öffnen des Entlüftungsventils 10 sinkt, wie bereits beschrieben, der Gegendruck im System. Der Gegendruck kann daher leichter von der Pumpe 4 überwunden werden, woraus eine geringere Leistungsaufnahme und eine niedrigere Gesamtleistung der Pumpe 4 resultiert. Das Entlüftungsventil 10 kann während verschiedener Betriebszustände eines Motors bzw. einer katalytischen Abgasnachbehandlung betätigt werden, beispielsweise nicht nur während eines Anfahrzyklus, sondern auch während des Betriebes, und kann so eine dynamische Entlüftung gewährleisten.

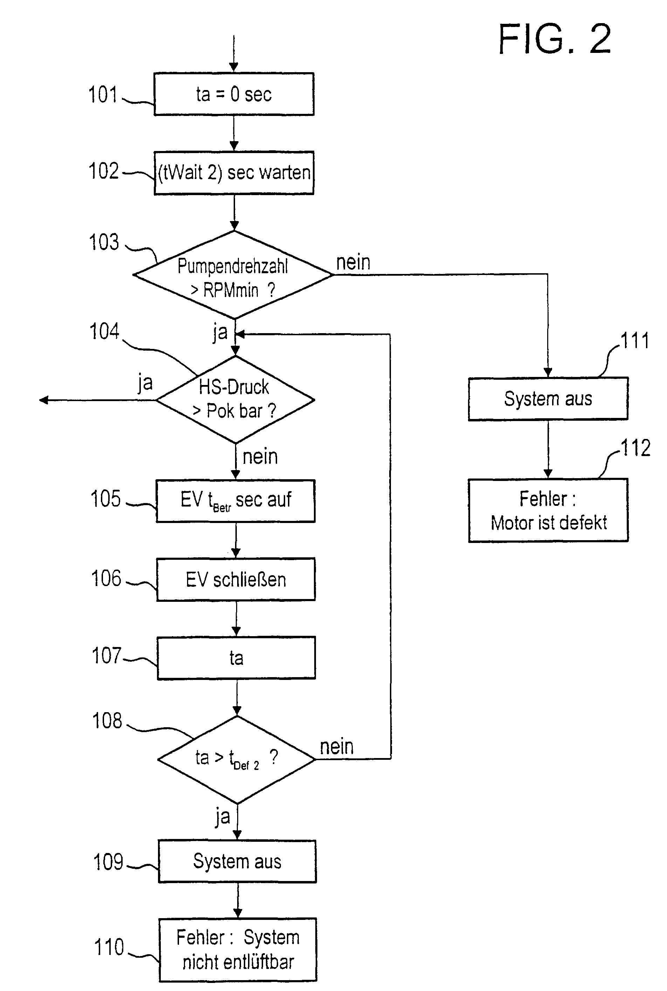

Bevorzugte Ansteuerstrategien bzw. -verfahren des dargestellten Dosiersystems werden nun anhand der Flußdiagramme der Figuren 2 bis 4 näher erläutert.

In Figur 2 ist eine Startstrategie (Erstanlauf) des erfindungsgemäßen Dosiersystems dargestellt. In einem Schritt 101 wird zur Initialisierung der Strategie eine Startzeit ta festgelegt.

Während eines anschließenden Schrittes 102 erfolgt während einer Zeit twait2 gegebenenfalls eine Überprüfung der Komponenten des Systems auf ihre Funktionsfähigkeit (beispielsweise Ansteuerbarkeit durch eine Steuerlogik). Anschließend wird in einem Schritt 103 festgestellt, ob die Drehzahl der Pumpe 4 einen Minimalwert RPMmin überschreitet oder nicht. Ist dies der Fall, wird in einem Schritt 104 festgestellt, ob der Druck in der Harnstoffleitung 1b einen voreinstellbaren Systemdruck, welcher als ausreichend für einen normalen Funktionsablauf des Harnstoff-Dosiersystems angesehen wird, erreicht hat oder nicht (Druck Pok). Ist dieser Druck Pok erreicht, verzweigt das Flußdiagramm zu einem hier nicht dargestellten Flußdiagramm eines normalen Funktionsablaufs.

Wird jedoch festgestellt, daß der Druck in der Harnstoffleitung 1a diesen Druck Pok nicht erreicht, wird das Entlüftungsventil 10 (in den Flußdiagrammen der Figuren 2 bis 4 als EV bezeichnet) über eine bestimmte Zeit t_{betr} geöffnet (Schritt 105). In einem anschließenden Schritt 106 wird das Ventil 10 wieder geschlossen. Das Öffnen und Schließen des Ventils 10 dient der Entlüftung der Leitung 1b. Es wird hierbei davon ausgegangen, daß ein zu niedriger Druck in der Harnstoffleitung 1b auf die Anwesenheit von Luftblasen zurückzuführen ist. Durch Öffnen und anschließendes Schließen des Ventils 10 kommt es zwar zunächst zu einem weiteren Absinken des Drucks, jedoch gleichzeitig zu einer Entlüftung, nach welcher prinzipiell ein höherer Druck in der Harnstoffleitung 1a einstellbar ist. Zur Feststellung, ob nach Schließen des Ventils 10 in dem Schritt 106 ein ausreichender Druck in der Harnstoffleitung 1a erzeugbar ist, wird zunächst in einem Schritt 107 eine Druckaufbauzeit ta abgewartet. Die Druckaufbauzeit ta wird hierbei inkrementell bis zum Erreichen eines gewünschten Systemdrucks verlängert. Die Zeit ta, für die sich der gewünschte Systemdruck bzw. Druck in der Harnstoffleitung 1a einstellt, wird in einem Schritt 108 mit einer voreinstellbaren Zeit t_{Def2} verglichen. Wird festgestellt, daß die Druckaufbauzeit ta kleiner als diese Zeit t_{Def2} ist, erfolgt eine Rückverzweigung zu Schritt 104, in welchem wiederum festgestellt wird, ob der Druck in der Leitung 1b größer als der Wert Pok ist. Ist dies nun der Fall, erfolgt die schon erwähnte Verzweigung zu der üblichen Ansteuerstrategie.

Wird in dem Schritt 108 jedoch festgestellt, daß die Druckaufbauzeit ta größer als die Zeit t_{Def2} ist, wird in einem Schritt 109 festgestellt, daß das Entlüftungssystem (Ventil 10) ausgeschaltet ist, und in einem Schritt 110 ein Fehler des Systems in dem Sinne, daß es nicht entlüftbar ist, festgestellt.

Wird in dem oben beschriebenen Schritt 103 festgestellt, daß die Pumpendrehzahl der Pumpe 4 den Wert RPMmin unterschreitet, erfolgt eine Verzweigung zu einem Schritt 111, in welchem festgestellt wird, daß das Harnstoffdosiersystem insgesamt ausgeschaltet ist. In einen anschließenden Schritt 112 wird auf einen Motordefekt erkannt.

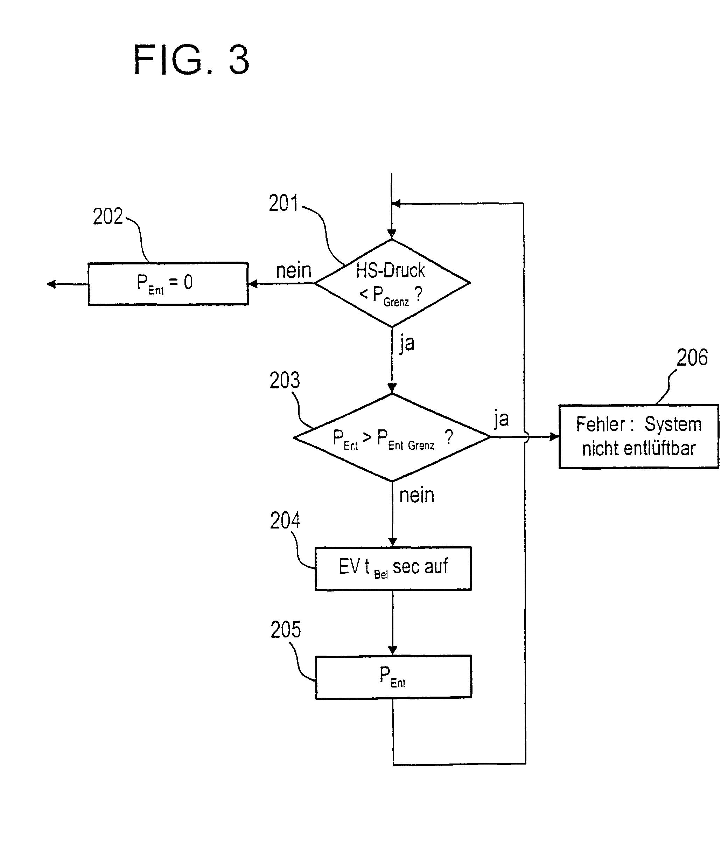

In Figur 3 ist ein Flußdiagramm zur Darstellung eines dynamischen Entlüftens während des Normalbetriebs des Harnstoff-Dosiersystems dargestellt. Hier wird zunächst in einem Schritt 201 festgestellt, ob der Harnstoffdruck kleiner als ein Grenzwert P_{Grenz} ist oder nicht. Ist der Harnstoffdruck nicht kleiner als dieser Grenzwert, wird in einem Schritt 202 entschieden, daß keine Entlüftung notwendig ist, d. h. ein Entlüftungsdruck gleich Null gesetzt werden kann.

Ist der Harnstoffdruck jedoch kleiner als der Grenzwert P_{Grenz}, wird in einem Schritt 203 festgestellt, ob ein notwendiger Entlüftungsdruck P_{Ent} einen Entlüftungsdruckgrenzwert P_{EntGrenz} überschreitet oder nicht. Wird dieser Grenzwert überschritten, d. h. ist eine Entlüftung unter allzu starker Druckminderung notwendig, wird in einem Schritt 206 ein Fehler dahingehend erkannt, daß das System nicht entlüftbar ist.

Wird jedoch festgestellt, daß der notwendige Entlüftungsdruck oberhalb dieses Grenzwertes liegt, wird das Entlüftungsventil 10 über einen Zeitraum t_{Bel} aufgesteuert. In einen anschließenden Schritt 205 wird der hierbei notwendige Entlüftungsdruck P_{Ent} festgestellt und anschließend unter Rückverzweigung auf Schritt 201 (eventuell unter Berücksichtigung einer Druckaufbauzeit) wiederum festgestellt, ob der Harnstoffdruck den Grenzwert P_{Grenz} unterschreitet oder nicht.

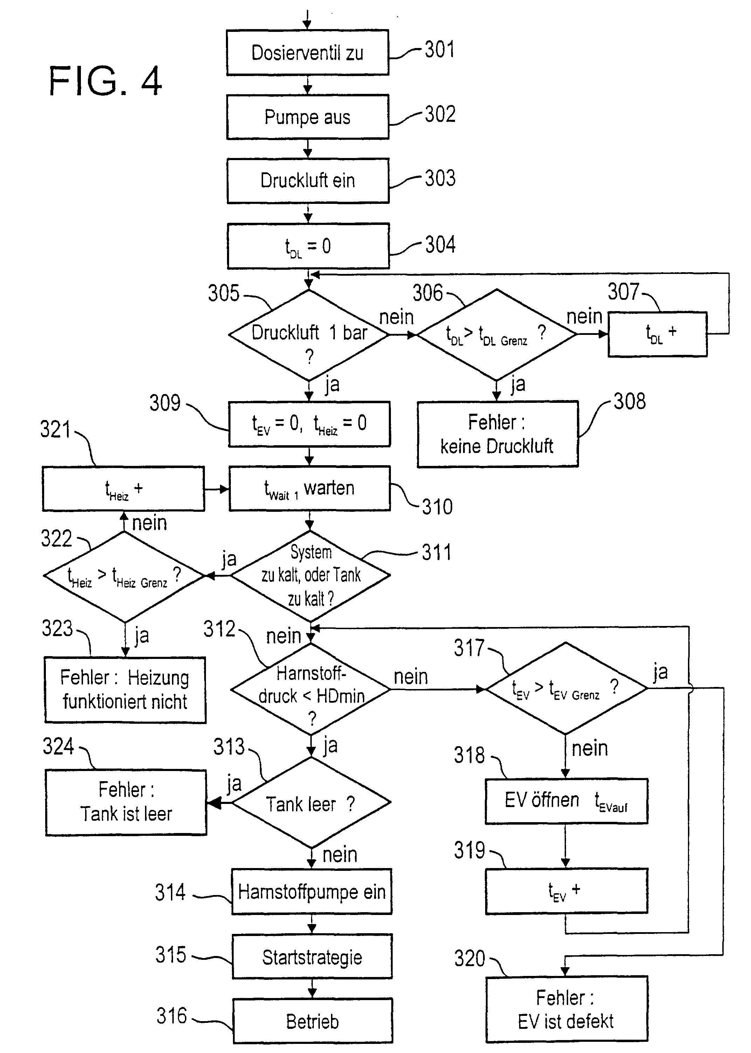

In Figur 4 wird schließlich eine Anlaufstrategie dargestellt, welche beispielsweise bei jedem Motorstart durchführbar ist. Hierbei werden auch Strategien zur Ansteuerung eines Druckluftsystems, welches mit dem Harnstoffsystem zur Erzeugung eines Aerosols zusammenwirkt, sowie ein Heizungssystem mit berücksichtigt. Bezüglich der Heizstrategie sei angemerkt, daß üblicherweise verwendete Harnstofflösungen bei Temperaturen um etwa -11°Celsius gefrieren, so daß unterhalb dieser Temperatur eine Ansteuerung des Heizungssystems notwendig ist.

In einem Schritt 301 wird das Dosierventil 7 abgeschaltet, in einem anschließenden Schritt 302 wird die Pumpe 4 ausgeschaltet. Druckluft wird in einem Schritt 303 eingeschaltet, und in einem Schritt 304 wird ein Nullpunkt für eine Druckaufbauzeit definiert. Wird in einem Schritt 305 festgestellt, daß der Luftdruck des Druckluftsystems einen voreinstellbaren Grenzwert, beispielsweise 1 bar, überschreitet, werden Nullpunkte bezüglich einer Heizzeit und einer Ansteuerzeit des Entlüftungsventils 10 gesetzt (Schritt 309).

Wird in dem Schritt 305 jedoch festgestellt, daß die Druckluft den voreingestellten Wert nicht überschreitet, wird in einem Schritt 306 festgestellt, ob die Zeit t_{DL} zum Aufbau des gewünschten Druckes einen Grenzwert t_{DLGrenz} überschreitet oder nicht. Ist dieser Grenzwert überschritten, wird festgestellt, daß keine Druckluft vorhanden ist (Schritt 308). Überschreitet die Zeit t_{DL} den Grenzwert nicht, wird in einem Schritt 307 die Zeit t_{D1} um ein Inkrement erhöht (t_{DL}+), und in dem Schritt 305 wiederum festgestellt, ob der Druck den voreingestellten Wert überschreitet.

Überschreitet der Druck vor Ablauf der Zeit t_{DLGrenz} den voreingestellten Wert, verzweigt das System, wie bereits erwähnt, zu Schritt 309, in welchem eine Ansteuerzeit für das Entlüftungsventil 10 und das Heizungssystem auf Null gesetzt werden.

In einem anschließenden Schritt 310 wird während einer Wartezeit t_{wait1} eine voreinstellbare Zeit abgewartet. In einem anschließenden Schritt 311 wird festgestellt, ob das System bzw. der Harnstofftank zu kalt ist oder nicht. Ist dies der Fall, wird das Heizungssystem aktiviert, und in Schritt 322 festgestellt, ob die notwendige Heizzeit t_{Heiz} eine voreinstellbare Grenzzeit t_{HeizGrenz} überschreitet oder nicht. Wird diese Grenze überschritten, wird darauf erkannt, daß die Heizung- nicht funktioniert (Schritt 323). Ist die Zeit t_{HeizGrenz} noch nicht erreicht, wird die Heizzeit um ein Inkrement erhöht (t_{Heiz}+), wonach das System zu den Schritten 310 und 311 zurückverzweigt. Wird in Schritt 311 festgestellt, daß der Harnstofftank bzw. das System eine ausreichende Temperatur aufweist, ist die Anlaufstrategie für das Heizsystem abgeschlossen, und das System verzweigt zu einem Schritt 312, in welchem festgestellt wird, ob der Harnstoffdruck einen minimalen Wert HDₘᵢₙ unterschreitet oder nicht. Ist dies der Fall, wird in einem Schritt 317 festgestellt, ob die Ansteuerzeit des Entlüftungsventils einen Grenzwert t_{EVGrenz} überschreitet oder nicht. Ist dies der Fall, wird in einem Schritt 320 darauf erkannt, daß das Entlüftungsventil 10 defekt ist. Ist dies nicht der Fall, wird in einem Schritt 318 über ein Zeitintervall t_{Evauf} das Entlüftungsventil geöffnet. In einem anschließenden Schritt 319 wird die Ansteuerzeit t_{EV} um ein Inkrement erhöht (t_{EV}+), woraufhin das System zu Schritt 312 zurückverzweigt.

Wird in Schritt 312 hingegen erkannt, daß der Harnstoffdruck kleiner als der minimale Druck HDₘᵢₙ ist, wird in Schritt 313 überprüft, ob der Harnstofftank leer ist oder nicht. Ist dies der Fall, wird in einem Schritt 324 auf leeren Tank erkannt. Ist dies jedoch nicht der Fall, wird in einem Schritt 314 die Pumpe 4 eingeschaltet, woraufhin in einem Schritt 305 die bereits beschriebene Startstrategie begonnen wird, und anschließend der normale Betrieb des Systems durchgeführt wird (Schritt 316).

## Patentansprüche

1. Verfahren zur Dosierung eines im Rahmen einer katalytischen Abgaanachbehandlung verwendeten Reduktionsmittels, wobei das Reduktionsmittel über ein Leitungssystem (1a,1b) einer Dosier (7)- und/oder Mischeinrichtung zugeführt wird, **dadurch gekennzeichnet, dass** ein in dem eine Pumpe (4) aufweisenden Leitungssystem (1a,1b) herrschender Druck (9) überwacht wird und dass, falls der Druck unterhalb eines Schwellenwerts (Pₒₖ; P_{Grenz}) liegt, ein Entlüftungsventil (10) geöffnet werden kann (105; 204), so dass das Leitungssystem auf der mit der Dosier (7)- beziehungsweise Mischeinrichtung verbundenen Seite der Pumpe (4) mit einem Entlüftungskreislauf (1c,1d) verbunden wird, der Druck zunächst weiter absinkt und das Leitungssystem (1a,1b) entlüftet wird.

2. Verfahren nach Anspruch 1, **dadurch gekennzeichnet, dass** der Entlüftüngekreialauf ein getaktet ansteuerbares Entlüftungsventil (10) aufweist, welches zur Modifikation des Drucks in dem Leitungssystem betätigbar ist.

## Claims

1. Method for metering a reducing agent used as part of a catalytic exhaust-gas aftertreatment, the reducing agent being fed via a system of lines (1a, 1b) to a metering (7) and/or mixing device, **characterized in that** a pressure (9) which prevails in the system of lines (1a, 1b), which includes a pump (4), is monitored, and **in that**, if the pressure is below a threshold value (Pₒₖ; Pₗᵢₘᵢₜ), a bleed valve (10) can be opened (105; 204), so that the system of lines is connected to a bleed circuit (1c, 1d) on that side of the pump (4) which is connected to the metering (7) and/or mixing device, the pressure is initially reduced further and the system of lines (1a, 1b) is bled.

2. Method according to Claim 1, **characterized in that** the bleed circuit includes a bleed valve (10) which can be controlled cyclically and can be actuated in order to modify the pressure in the system of lines.

## Revendications

1. Procédé de dosage d'un agent réducteur utilisé pour le traitement catalytique des gaz d'échappement selon lequel on fournit l'agent réducteùr par un système de conduite (1a, 1b) à une installation de mélange de dosage (7),
**caractérisé en ce qu'**
on surveille la pression (9) régnant dans un système de conduite (1a, 1b) comportant une pompe (4) et au cas où la pression est inférieure à un seuil (Pok, P_{lim evac}), on ouvre une soupape d'évacuation (10) (105, 204) pour que le système de conduite du côté de la pompe (4) relié à l'installation de dosage ou de mélange (7) soit relié à un circuit d'évacuation (1c, 1d) qui continue tout d'abord de diminuer la pression et évacue le système de conduite (1a, 1b).

2. Procédé selon la revendication 1,
**caractérisé en ce que**
le circuit d'évacuation comporte une soupape d'évacuation (10) commandée en cadence et qui est actionnée pour modifier la pression dans le système de conduite.
